# EUROPEAN PATENT APPLICATION

(11) **EP 4 815 239 A1**
(43) Date of publication of application: **30.09.2026**
(21) Application number: 26162717.8
(22) Date of filing: 05.03.2026
(51) Int. Cl.: H02J 3/04, H02J 3/38, H02J 3/388, H02J 13/00, H02J 13/13, H02J 3/08

(54) **SUBARRAY CONTROLLER AND PHOTOVOLTAIC SYSTEM**

(30) Priority: 21.03.2025 CN 202510345106
(71) Applicant: HUAWEI TECHNOLOGIES CO., LTD., Shenzhen 518129 (CN)
(72) Inventor: YU, Hao, Shenzhen, 518129 (CN); ZOU, Zhenghua, Shenzhen, 518129 (CN); LI, Junming, Shenzhen, 518129 (CN)
(74) Representative: Gill Jennings & Every LLP

(57) **Abstract**

This application provides a subarray controller and a photovoltaic system, and belongs to the field of power electronics technologies. In the subarray controller provided in this application, a voltage sampling circuit is implemented through collaboration of a current-limiting resistor and a current transformer. The current-limiting resistor can limit a magnitude of a current flowing into the current transformer. Therefore, specifications of the current transformer can be low, and the low-specification current transformer has a small size to effectively reduce a board layout area, thereby reducing a size of the subarray controller. Good sampling performance can be maintained when an input current of the current transformer fluctuates within a large range near a rated current of the current transformer. Therefore, compared with a voltage transformer, a combination of the current-limiting resistor and the current transformer can implement voltage detection in a wide range.

## Description

### TECHNICAL FIELD

This application relates to the field of power electronics, and in particular, to a subarray controller and a photovoltaic system.

### BACKGROUND

A photovoltaic (photovoltaic, PV) system can usually be divided into a plurality of photovoltaic subarrays, and each photovoltaic subarray includes a plurality of photovoltaic panels and a plurality of power converters (also referred to as inverters). Each power converter is connected to at least one photovoltaic panel, and is configured to convert a direct current (direct current, DC) that is output by the at least one photovoltaic panel into an alternating current (alternating current, AC) and output the alternating current. In the photovoltaic system, each photovoltaic subarray is further equipped with subarray control. A subarray controller, also referred to as a microgrid controller or a data collector, can sample and feed back a voltage and a current of the photovoltaic subarray to a station control layer device.

In general, the subarray controller samples the voltage by using a power-dedicated voltage transformer. However, the power-dedicated voltage transformer is of a large size, resulting in a large size of the subarray controller.

### SUMMARY

This application provides a subarray controller and a photovoltaic system, to resolve a technical problem about a large size of the subarray controller.

According to a first aspect, a subarray controller is provided. The subarray controller includes a voltage sampling circuit and a current sampling circuit. In addition, the subarray controller is configured to communicate with a plurality of power converters, and is configured to transmit a voltage value collected by the voltage sampling circuit and a current value collected by the current sampling circuit to a station control device. The voltage sampling circuit includes a current-limiting resistor, a first current transformer, and a first sampling resistor. One end of the current-limiting resistor is connected to a first end of the voltage sampling circuit, the other end of the current-limiting resistor is connected to a primary winding of the first current transformer, and the first sampling resistor is connected in parallel to a secondary winding of the first current transformer. The first end of the voltage sampling circuit may be configured to connect to a voltage sampling point, for example, may be connected to one end of a on-grid/off-grid switch.

In the solution provided in this application, the voltage sampling circuit is implemented by using the current-limiting resistor, the current transformer, and the sampling resistor in collaboration. The current-limiting resistor can limit a magnitude of a current flowing into the current transformer. Therefore, specifications of the current transformer can be low (for example, a winding in the current transformer can be thin). Compared with a power-dedicated voltage transformer, the current transformer has a small size to effectively reduce a board layout area, thereby reducing a size of the subarray controller, to ensure that the subarray controller can support horizontal and rail-mounted installation of a control cabinet. In addition, the current transformer has a simple installation process, thereby effectively improving installation efficiency and reducing installation costs. Good sampling performance can be maintained when an input current of the current transformer fluctuates within a large range (for example, 20% to 120% of a rated current of the current transformer) near the rated current. Therefore, compared with a voltage transformer, a combination of the current-limiting resistor and the current transformer can implement voltage detection in a wide range.

Optionally, the voltage sampling circuit is configured to collect values of voltages at two ends of a on-grid/off-grid switch, and the current sampling circuit is configured to collect a value of a current flowing through the on-grid/off-grid switch.

The subarray controller collects and reports the values of the voltages at the two ends of the on-grid/off-grid switch, and collects and reports the value of the current flowing through the on-grid/off-grid switch, to ensure that the station control device performs power computing based on the received voltage values and the received current value and performs an operation such as determining turn-on of the on-grid/off-grid switch.

Optionally, the voltage sampling circuit may be further configured to collect a value of a voltage on a low-voltage side of the transformer, and the current sampling circuit may be further configured to collect a value of a current on the low-voltage side of the transformer. The transformer may be a box-type transformer connected to the plurality of power converters. In addition, alternating-current ends of the plurality of power converters are connected in parallel to the low-voltage side of the box-type transformer.

It may be understood that the plurality of power converters connected to the low-voltage side of the transformer may be referred to as a photovoltaic subarray. The subarray controller collects the value of the voltage and the value of the current on the low-voltage side of the transformer by using the sampling circuits, and may compute power on the low-voltage side of the transformer, thereby implementing direct collection and report of the power at a subarray level.

Optionally, the subarray controller includes two voltage sampling circuits, the two voltage sampling circuits are configured to separately collect values of voltages at different positions on a same line, and the current sampling circuit is configured to collect a value of a current on the line.

The two voltage sampling circuits separately collect values of voltages at different positions on the same line, thereby implementing precise sampling of the values of the voltages at different positions on the same line. For example, the two voltage sampling circuits may separately collect values of voltages at the two ends of the on-grid/off-grid switch. Accordingly, a first end of one voltage sampling circuit may be connected to one end of the on-grid/off-grid switch, and a first end of the other voltage sampling circuit may be connected to the other end of the on-grid/off-grid switch.

Optionally, the line includes a plurality of phase wires, for example, includes three phase wires. One of the two voltage sampling circuits may be configured to collect voltage values of the plurality of phase wires, and the other voltage sampling circuit may be configured to collect a voltage value of one phase wire in the line.

It may be understood that, for different positions (for example, the two ends of the on-grid/off-grid switch) on the same line, the subarray controller may sample a voltage value of each phase wire at one position (for example, one end of the on-grid/off-grid switch). For another position (for example, the other end of the on-grid/off-grid switch), a voltage value of only one phase wire may be sampled, and voltage values of the other phase wires may be obtained through reckoning based on the sampled voltage value. Therefore, a quantity of voltage sampling circuits that need to be disposed in the subarray controller can be effectively reduced, thereby reducing the size of the subarray controller and reducing costs and structural complexity.

Optionally, the current sampling circuit is configured to collect current values of a plurality of phase wires in the line. For example, the subarray controller may include a plurality of current sampling circuits, and the plurality of current sampling circuits are connected to the plurality of phase wires in a one-to-one correspondence, so that alternating-current values of the plurality of phase wires can be precisely sampled.

In a scenario in which the current sampling circuit is configured to collect the value of the current flowing through the on-grid/off-grid switch, because the two ends of the on-grid/off-grid switch are in a series connection relationship, the plurality of current sampling circuits may be connected to one end of the on-grid/off-grid switch and collect current values of a plurality of phase wires at that end of the on-grid/off-grid switch.

Optionally, the current sampling circuit includes a second current transformer and a second sampling resistor. A primary winding of the second current transformer is connected to a first end of the current sampling circuit, and the second sampling resistor is connected in parallel to a secondary winding of the second current transformer. The first end of the current sampling circuit may be configured to connect to a current sampling point, for example, may be connected to one end of the on-grid/off-grid switch.

In the current sampling circuit, the sampling resistor is disposed independent of the second current transformer, that is, the second current transformer does not need to integrate the sampling resistor. Therefore, a size of the second current transformer can be effectively reduced. Compared with a power-dedicated current transformer, the second current transformer has a small size, and its installation process is simple.

Optionally, an order of magnitude of a resistance value of the current-limiting resistor in the voltage sampling circuit may be a kilo-ohm level, and a transformation ratio of the first current transformer may be 2 milliamperes (mA) /2 mA.

In the solution provided in this application, because the resistance value of the current-limiting resistor is large, a high voltage of an alternating-current line can be converted into a small current and then input to the primary winding of the first current transformer. Accordingly, specifications of the first current transformer can be small. For example, a miniature current transformer with a transformation ratio of 2 mA/2 mA may be employed. In this way, a board layout area of the voltage sampling circuit can be effectively reduced.

Optionally, the voltage sampling circuit further includes a fuse and a first varistor. One end of the current-limiting resistor is connected to the first end of the voltage sampling circuit through the fuse, and the first varistor is connected in parallel to the primary winding of the first current transformer.

Optionally, the current sampling circuit further includes a second varistor. The second varistor is connected in parallel to the primary winding of the second current transformer.

It may be understood that, when a current in a circuit is excessively large, a fuse connected in series in the circuit is blown due to heating, to cut off the circuit and play a protection function. Therefore, the fuse is connected in series in the voltage sampling circuit to implement surge protection. In the current sampling circuit, there is no need to connect a fuse in series, to prevent the current transformer (current transformer, CT) from being disconnected and generating a high voltage.

It may be further understood that the varistor is a resistor device having a nonlinear volt-ampere characteristic. In a normal operating voltage range, the varistor has very high resistance and is equivalent to an insulator, and has minor impact on the sampling circuit. When surge energy occurs in the sampling circuit, the resistance of the varistor decreases sharply to quickly discharge the surge energy, so that impact of the surge on the sampling circuit can be reduced, thereby improving stability and reliability of the sampling circuit.

Optionally, the subarray controller further includes a first communication circuit. The first communication circuit is separately connected to a second end of the voltage sampling circuit and a second end of the current sampling circuit, and is configured to report the voltage value collected by the voltage sampling circuit and the current value collected by the current sampling circuit to the station control device.

The sampling circuits in the subarray controller can directly collect the voltage value and the current value, and can directly compute power based on the collected voltage value and the collected current value, thereby implementing direct collection of the power at a subarray level. Accordingly, the first communication circuit in the subarray controller can implement fast report of the power at a subarray level, and can satisfy a requirement of a power feedback delay (for example, 100 ms) in reactive power cluster control.

Optionally, the subarray controller further includes a second communication circuit. The second communication circuit is configured to communicate with a plurality of power converters, to obtain running status data reported by the plurality of power converters, for example, voltages, currents, and power. For example, the second communication circuit may be a meter bus (meter bus, MBUS) circuit, or may be a power line communication (power line communication, PLC) circuit.

According to a second aspect, a photovoltaic system is provided. The photovoltaic system includes a plurality of power converters, a first transformer, a first on-grid/off-grid switch, and a first subarray controller. The first subarray controller is the subarray controller provided in the first aspect. Alternating-current ends of the plurality of power converters are connected in parallel to one end of the first transformer, and the other end of the first transformer is connected to a power grid through the first on-grid/off-grid switch. The first subarray controller is separately connected to two ends of the first on-grid/off-grid switch, and is configured to collect values of voltages at the two ends of the first on-grid/off-grid switch and collect a value of a current flowing through the first on-grid/off-grid switch.

Optionally, the photovoltaic system includes a plurality of photovoltaic subarrays. Each photovoltaic subarray includes a plurality of power converters, the first transformer, the first on-grid/off-grid switch, and the first subarray controller. In addition, the photovoltaic system further includes a second transformer, a second on-grid/off-grid switch, and a second subarray controller, where the second subarray controller is the subarray controller provided in the first aspect. The first on-grid/off-grid switches in the plurality of photovoltaic subarrays are connected in parallel to one end of the second transformer, and the other end of the second transformer is connected to the power grid through the second on-grid/off-grid switch. The second subarray controller is separately connected to two ends of the second on-grid/off-grid switch, and is configured to sample values of voltages at the two ends of the second on-grid/off-grid switch and a value of a current flowing through the second on-grid/off-grid switch.

In other words, in the solution provided in this application, the first subarray controller can be disposed at an access point of each photovoltaic array, and the second subarray controller can be disposed at a grid-connected point of the photovoltaic system. In this way, power on two sides of the access point of each photovoltaic subarray can be directly collected, and power on two sides of the grid-connected point can be directly collected.

According to a third aspect, a photovoltaic system is provided. The photovoltaic system includes a plurality of power converters, a transformer, and the subarray controller provided in the first aspect. Alternating-current ends of the plurality of power converters are connected in parallel to one end (namely, a low-voltage side) of the transformer, and the other end (namely, a high-voltage side) of the transformer is configured to connect to a power grid. The subarray controller is connected to one end of the transformer, and is configured to collect a value of a voltage and a value of a current on the low-voltage side of the transformer.

In conclusion, this application provides a subarray controller and a photovoltaic system. In the subarray controller provided in this application, the voltage sampling circuit is implemented by using the current-limiting resistor and the current transformer in collaboration. The current-limiting resistor can limit the magnitude of the current flowing into the current transformer. Therefore, specifications of the current transformer can be low (for example, a winding in the current transformer can be thin). Compared with a power-dedicated voltage transformer, the current transformer has a small size to effectively reduce a board layout area, thereby reducing a size of the subarray controller, to ensure that the subarray controller can support horizontal and rail-mounted installation of a control cabinet. In addition, the current transformer has a simple installation process, thereby effectively improving installation efficiency and reducing installation costs. Good sampling performance can be maintained when an input current of the current transformer fluctuates within a large range (for example, 20% to 120% of a rated current of the current transformer) near the rated current. Therefore, compared with a voltage transformer, a combination of the current-limiting resistor and the current transformer can implement voltage detection in a wide range.

### BRIEF DESCRIPTION OF DRAWINGS

FIG. 1 is a diagram of a structure of a photovoltaic system according to an embodiment of this application;
FIG. 2 is a diagram of a structure of another photovoltaic system according to an embodiment of this application;
FIG. 3 is a diagram of a structure of a subarray controller according to an embodiment of this application;
FIG. 4 is a diagram of a structure of a current sampling circuit in a subarray controller according to an embodiment of this application;
FIG. 5 is a diagram of a structure of a voltage sampling circuit in a subarray controller according to an embodiment of this application;
FIG. 6 is a diagram of a structure of a voltage sampling circuit in another subarray controller according to an embodiment of this application;
FIG. 7 is a diagram of a structure of a current sampling circuit in another subarray controller according to an embodiment of this application;
FIG. 8 is a diagram of a structure of another subarray controller according to an embodiment of this application;
FIG. 9 is a diagram of a structure of still another photovoltaic system according to an embodiment of this application; and
FIG. 10 is a diagram of a structure of yet another photovoltaic system according to an embodiment of this application.

### DESCRIPTION OF EMBODIMENTS

The following describes in detail a subarray controller and a photovoltaic system provided in embodiments of this application with reference to the accompanying drawings.

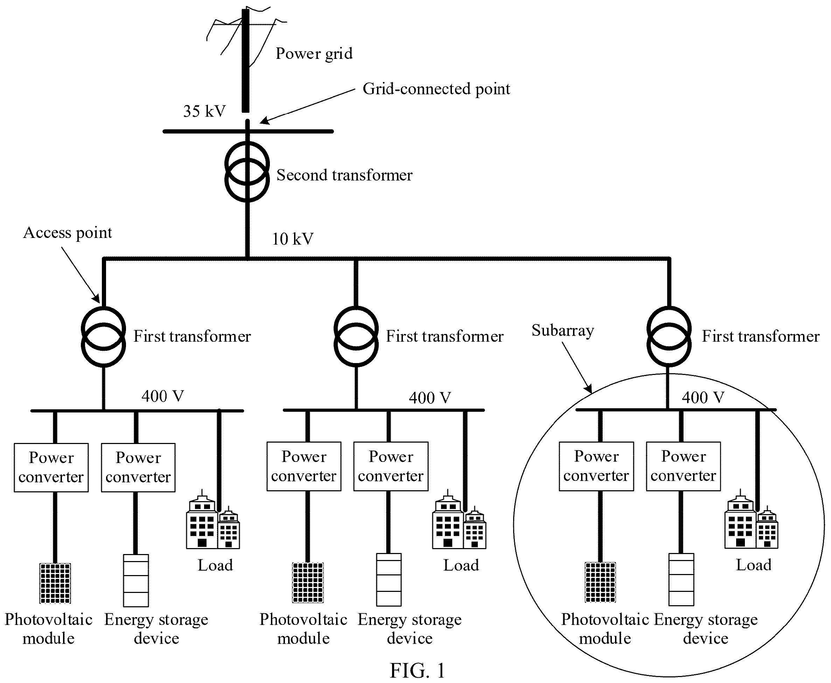

FIG. 1 is a diagram of a structure of a photovoltaic system according to an embodiment of this application. As shown in FIG. 1, the photovoltaic system includes one or more photovoltaic subarrays. For example, FIG. 1 shows a plurality of photovoltaic subarrays. Each photovoltaic subarray includes a plurality of power converters. The plurality of power converters each are configured to implement power conversion between a direct current (direct current, DC) and an alternating current (alternating current, AC). As shown in FIG. 1, a direct-current end of each power converter is configured to connect to a photovoltaic module or an energy storage device, and an alternating-current end of each power converter may be connected to a first transformer and is configured to convert a direct current at the direct-current end into an alternating current and then transmit the alternating current to the first transformer. In addition, alternating-current ends of the plurality of power converters in each photovoltaic array may be connected in parallel to the first transformer.

It may be understood that the photovoltaic module is also referred to as a photovoltaic panel, and can convert light energy into electric energy and then output the electric energy to the power converter. For example, the power converter may be an inverter. The energy storage device may be an energy-storage battery, and can output a direct current to the power converter. For example, the power converter may be a power conversion system (power convert system, PCS), which is also referred to as an energy storage converter. The PCS can further charge the energy storage device after converting an alternating current into a direct current, in other words, the PCS can implement bidirectional power conversion.

It can be further learned from FIG. 1 that each photovoltaic subarray may further include a load. The load is connected to the alternating-current end of the power converter, and is configured to operate under drive of an alternating current output by the power converter.

As shown in FIG. 1, the plurality of power converters in each photovoltaic array may be connected to a first transformer. The first transformer may be a transformer for converting a low voltage into a medium voltage. The first transformers in the plurality of photovoltaic arrays are then connected in parallel to a second transformer. The second transformer may be a transformer for converting a medium voltage into a high voltage. In addition, the second transformer may be connected to a power grid. The low voltage may be 400 volts (V), the medium voltage may be 10 kilovolts (kV), and the high voltage may be 35 kV.

Refer to FIG. 1 again. One end that is of each first transformer and that is configured to connect to the second transformer is also referred to as an access point, and one end that is of the second transformer and that is connected to the power grid is also referred to as a grid-connected point or a on-grid/off-grid point. A on-grid/off-grid switch is disposed at both the access point and the grid-connected point, and the on-grid/off-grid switch is configured to implement on-grid/off-grid switching. Grid-connected is a running state of incorporation into the power grid after the power converter converts a direct current generated by the photovoltaic module or the energy storage device into an alternating current. Off-grid is a state of running independent of the power grid. In the off-grid state, the power converter can convert a direct current provided by the photovoltaic panel or the energy-storage battery into an alternating current, and then directly supply power to the load.

In this embodiment of this application, one subarray controller (not shown in FIG. 1) may be further disposed in each photovoltaic subarray. The subarray controller is also referred to as a data collection device or a data collector, and can implement data collection and centralized control on each power converter in one photovoltaic subarray. In different application scenarios, a quantity of photovoltaic subarrays varies with a capacity of the photovoltaic system. For example, in a large-scale scenario such as a photovoltaic power station, the photovoltaic system includes a plurality of photovoltaic subarrays, power of each photovoltaic subarray may be at a megawatt (MW) level, and capacities of the plurality of photovoltaic subarrays can reach tens of MW or even higher. In a small-scale scenario such as an industrial and commercial scenario, the photovoltaic system may include only one photovoltaic subarray, and power of the photovoltaic subarray may be at the MW level, for example, may be 2 MW or 3 MW. In addition, the photovoltaic subarray may be also referred to as a microgrid, and the subarray controller is also referred to as a microgrid controller (microgrid controller) or a smart microgrid controller (smart microgrid controller, SMGC).

It may be understood that, as shown in FIG. 1, in a large-scale scenario such as a photovoltaic power station, the plurality of photovoltaic subarrays can be connected to an alternating-current bus through the access points, and then connected to the grid-connected point through the second transformer. In a small-scale scenario such as an industrial and commercial scenario, namely, a microgrid scenario, the second transformer may not be disposed, in other words, the first transformer can directly access the power grid and the access point is the grid-connected point.

In some embodiments, a current sampling circuit and a voltage sampling circuit are disposed in the subarray controller. The current sampling circuit is configured to sample values of currents on two sides of the on-grid/off-grid switch, and the voltage sampling circuit is configured to sample values of voltages on the two sides of the on-grid/off-grid switch. The current sampling circuit usually includes a power-dedicated current transformer. The power-dedicated current transformer integrates a sampling resistor, and can convert a sampled current into a voltage and output the voltage. The voltage sampling circuit usually includes a power-dedicated secondary voltage transformer, and the voltage transformer can implement isolation and sampling of a high-voltage signal with high sampling precision. The power-dedicated voltage transformer usually supports 100 volts alternating-current (volts alternating current, VAC) voltage input and 3.53 VAC output. In addition, an input voltage of the voltage transformer is generally allowed to fluctuate only within a small range (for example, ±10%) near a rated voltage of a primary winding. Therefore, a range of voltages that can be sampled by the voltage transformer is narrow. However, in an industrial and commercial microgrid scenario, because a voltage range of a microgrid is wide and fluctuates greatly, the foregoing voltage transformer cannot conform to a voltage sampling requirement in the industrial and commercial microgrid scenario. In addition, the power-dedicated voltage transformer and the power-dedicated current transformer usually have large sizes, resulting in an increase in a size of the subarray controller. Furthermore, after the voltage transformer and the current transformer are soldered onto a printed circuit board (printed circuit board, PCB), lead wires of the transformers need to be connected to terminals on the PCB. The foregoing transformers have a complex installation process with high installation costs.

Alternatively, the voltage sampling circuit in the subarray controller may be implemented in a high-resistance voltage division manner. For example, the voltage sampling circuit may include a plurality of resistors connected in series and a post-stage operational amplifier. The plurality of resistors have high resistance, so that sampling can be implemented in the high-resistance voltage division manner. However, in consideration of a safety insulation issue, a safety distance needs to be ensured between the plurality of resistors connected in series. As a result, a board layout area of the voltage sampling circuit is large, and accordingly the size of the subarray controller increases.

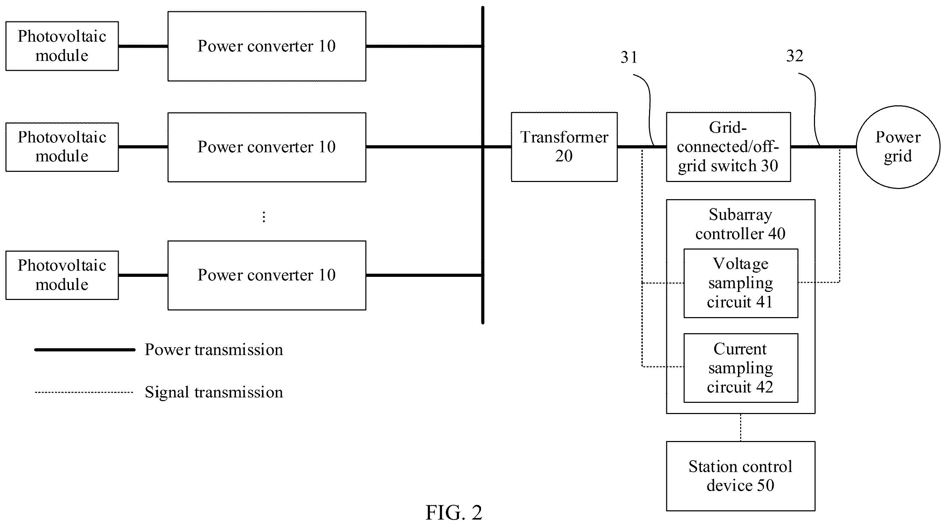

An embodiment of this application provides a subarray controller. The subarray controller, also referred to as a microgrid controller or a data collector, may be used in a photovoltaic system, for example, may be used in the photovoltaic system shown in FIG. 1 or a photovoltaic system shown in FIG. 2. The subarray controller has a function of sampling voltage values and current values, and can implement direct collection of power at a subarray level. In addition, a sampling circuit in the subarray controller can adapt to voltage detection in a wide range, and has a small board layout area and a simple installation process, thereby effectively reducing a size of the subarray controller and lowering costs.

As shown in FIG. 2, the photovoltaic system includes a plurality of power converters 10, a transformer 20, a on-grid/off-grid switch 30, and a subarray controller 40. Alternating-current ends of the plurality of power converters 10 are connected in parallel to one end (namely, a low-voltage side) of the transformer 20, and the other end (namely, a high-voltage side) of the transformer 20 is connected to a power grid through the on-grid/off-grid switch 30. The subarray controller 40 is separately connected to two ends of the on-grid/off-grid switch 30. It may be understood that an architecture of the photovoltaic system shown in FIG. 2 is merely an example. The architecture of the photovoltaic system may be flexibly adjusted based on a requirement of an application scenario. This is not limited in this embodiment of this application.

Refer to FIG. 2 again. The subarray controller 40 includes a voltage sampling circuit 41 and a current sampling circuit 42. In addition, the subarray controller 40 is configured to communicate with the plurality of power converters 10, and is configured to transmit a voltage value collected by the voltage sampling circuit 41 and a current value collected by the current sampling circuit 42 to a station control device 50. For example, the voltage sampling circuit 41 may be configured to collect values of voltages at two ends of the on-grid/off-grid switch 30, and the current sampling circuit 42 is configured to collect a value of a current flowing through the on-grid/off-grid switch 30. Alternatively, the voltage sampling circuit 41 may be configured to collect a value of a voltage on the low-voltage side of the transformer 20, and the current sampling circuit 42 is configured to collect a value of a current on the low-voltage side of the transformer 20.

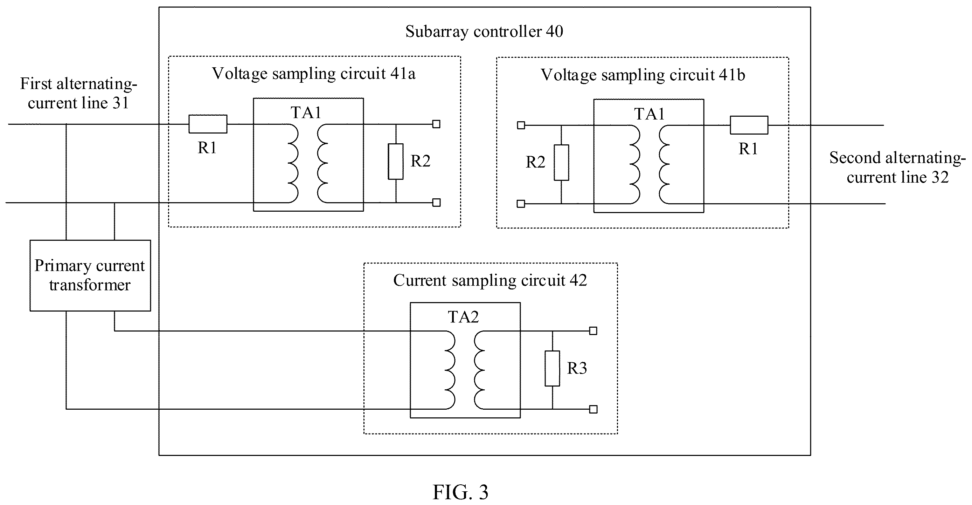

FIG. 3 is a diagram of a structure of a subarray controller according to an embodiment of this application. As shown in FIG. 3, the voltage sampling circuit 41 includes a current-limiting resistor R1, a first current transformer TA1, and a first sampling resistor R2. One end of the current-limiting resistor R1 is connected to a first end of the voltage sampling circuit 41. The other end of the current-limiting resistor R1 is connected to a primary winding of the first current transformer TA1. The first sampling resistor R2 is connected in parallel to a secondary winding of the first current transformer TA1. The first end of the voltage sampling circuit 41 is configured to connect to a voltage sampling point. For example, the first end of the voltage sampling circuit 41 may be configured to connect to one end of the on-grid/off-grid switch 30, or may be configured to connect to the low-voltage side of the transformer 20.

The current-limiting resistor R1 in the voltage sampling circuit 41 is connected in series between the first end of the voltage sampling circuit 41 and the primary winding of the first current transformer TA1, and can limit a magnitude of a current flowing into the primary winding of the first current transformer TA1, so that the current is within a range of currents that can be received by the primary winding of the first current transformer TA1. The first current transformer TA1 is configured to convert the current of the primary winding into a current of the secondary winding and output the current, and the first current transformer TA1 has an electrical isolation function. The first sampling resistor R2 is configured to convert the current of the secondary winding of the first current transformer TA1 into a voltage, thereby implementing sampling of an alternating-current voltage of an alternating-current line.

In the solution provided in this embodiment of this application, a current-limiting resistor with a proper resistance value may be selected based on a requirement of an application scenario, to ensure that the current-limiting resistor can limit the magnitude of the current input to the first current transformer to a range of currents that can be received by the primary winding of the first current transformer. The range of currents may be determined based on a rated current of the primary winding of the first current transformer, for example, may be 20% to 120% of the rated current. Good sampling performance can be maintained when an input current of the current transformer fluctuates within a large range (for example, 20% to 120% of the rated current) near the rated current. Therefore, compared with a voltage transformer, a combination of the current-limiting resistor and the current transformer can implement voltage detection in a wide range. In addition, because a sampling error of the current transformer can be generally controlled to be within 0.1% to 0.2%, the voltage sampling circuit formed by using the current transformer can implement high-precision voltage sampling.

The current-limiting resistor can limit the magnitude of the current flowing into the first current transformer. Therefore, specifications of the first current transformer can be low (for example, a winding in the current transformer can be thin). Compared with a power-dedicated voltage transformer and a power-dedicated current transformer, the current transformer used in this embodiment of this application has a small size and can effectively reduce a board layout area. In addition, the current transformer has a simple installation process (for example, it can be directly soldered onto a PCB, and no lead wire is required), thereby effectively improving installation efficiency and reducing installation costs. In addition, because the current transformer has the electrical isolation function and can satisfy a safety insulation requirement, the board layout area of the current-limiting resistor can be small. In conclusion, it can be learned that a board layout area of the voltage sampling circuit is small, to effectively reduce a size of the subarray controller, ensuring that the subarray controller can support horizontal and rail-mounted installation of a control cabinet.

Optionally, the voltage sampling circuit 41 is configured to collect values of voltages at two ends of the on-grid/off-grid switch 30, and the current sampling circuit 42 is configured to collect a value of a current flowing through the on-grid/off-grid switch 30.

The subarray controller 40 collects and reports the values of the voltages at the two ends of the on-grid/off-grid switch 30, and collects and reports the value of the current flowing through the on-grid/off-grid switch 30, to ensure that the station control device 50 performs power computing based on the received voltage values and the received current value and performs an operation such as determining turn-on of the on-grid/off-grid switch 30.

Optionally, the voltage sampling circuit 41 may be further configured to collect a value of a voltage on the low-voltage side of the transformer 20, and the current sampling circuit 42 may be further configured to collect a value of a current on the low-voltage side of the transformer 20. As shown in FIG. 2, the transformer 20 may be a box-type transformer connected to the plurality of power converters 10. In addition, alternating-current ends of the plurality of power converters 10 are connected in parallel to the low-voltage side of the box-type transformer 20.

It may be understood that the plurality of power converters 10 connected to the low-voltage side of the transformer 20 may be referred to as a photovoltaic subarray. The subarray controller 40 samples the value of the voltage and the value of the current on the low-voltage side of the transformer 20 by using the sampling circuits, and may compute power on the low-voltage side of the transformer 20, thereby implementing direct collection and report of the power at a subarray level.

Optionally, as shown in FIG. 3, the subarray controller 40 includes two voltage sampling circuits 41a and 41b. The two voltage sampling circuits 41a and 41b are configured to separately collect values of voltages at different positions on a same line, and the current sampling circuit 42 is configured to collect a value of a current on the line.

The two voltage sampling circuits separately collect values of voltages at different positions on the same line, thereby implementing precise sampling of the values of the voltages at different positions on the same line. For example, the two voltage sampling circuits 41a and 41b may separately collect values of voltages at the two ends of the on-grid/off-grid switch 30. Accordingly, a first end of the voltage sampling circuits 41a may be connected to one end of the on-grid/off-grid switch 30, and is configured to collect a value of a voltage at that end of the on-grid/off-grid switch 30. A first end of the other voltage sampling circuit 41b may be connected to the other end of the on-grid/off-grid switch 30, and is configured to collect a value of a voltage at the other end of the on-grid/off-grid switch 30.

For example, as shown in FIG. 2, one end of the on-grid/off-grid switch 30 may be connected to the transformer 20 through a first alternating-current line 31, and the other end of the on-grid/off-grid switch 30 may be connected to the power grid through a second alternating-current line 32. Therefore, it may also be considered that the first end of the voltage sampling circuit 41a is connected to the first alternating-current line 31, and it may also be considered that the first end of the voltage sampling circuit 41b is connected to the second alternating-current line 32.

Optionally, as shown in FIG. 3 again, the current sampling circuit 42 includes a second current transformer TA2 and a second sampling resistor R3. A primary winding of the second current transformer TA2 is connected to a first end of the current sampling circuit 42, and the first end of the current sampling circuit 42 is configured to connect to a current sampling point. For example, the first end of the current sampling circuit 42 may be configured to connect to either end (namely, the first alternating-current line 31 or the second alternating-current line 32) of the on-grid/off-grid switch 30, or may be configured to connect to the low-voltage side of the transformer 20. FIG. 3 illustrates a connection, as an example, to one end (namely, the first alternating-current line 31) of the on-grid/off-grid switch 30. The second sampling resistor R3 is connected in parallel to a secondary winding of the second current transformer TA2.

The second current transformer TA2 in the current sampling circuit 42 can convert a current of the primary winding (for example, an alternating current at either end of the on-grid/off-grid switch 30) into a current of the secondary winding and output the current. The second sampling resistor R3 is configured to convert the current of the secondary winding of the second current transformer TA2 into a voltage, thereby implementing current sampling.

In a scenario in which the current sampling circuit 42 is configured to collect the value of the current flowing through the on-grid/off-grid switch 30, because the two ends of the on-grid/off-grid switch 30 are in a series connection relationship, the current sampling circuit 42 needs to be connected to only one end of the on-grid/off-grid switch 30 and collect a value of an alternating current at that end.

It may be understood that the primary winding of the current transformer is also referred to as a primary winding, the secondary winding is also referred to as a secondary winding, and the sampling resistors (namely, the first sampling resistor R2 and the second sampling resistor R3) connected in parallel to the secondary winding are also referred to as secondary resistors.

It may be further understood that, as shown in FIG. 3, the first end of the current sampling circuit 42 may be connected to the current sampling point through a primary current transformer, for example, connected to one end of the on-grid/off-grid switch 30. The primary current transformer can convert a large current (for example, a current of 4000 A) at the current sampling point into a small current (for example, 5 A) and then output the small current. Accordingly, the second current transformer TA2 in the current sampling circuit 42 may also be referred to as a secondary current transformer. The primary current transformer may be disposed independent of the subarray controller 40, for example, may be disposed in the transformer 20.

In the foregoing current sampling circuit, the second sampling resistor is disposed independent of the second current transformer, that is, the second current transformer does not need to integrate the sampling resistor. Therefore, a size of the second current transformer can be effectively reduced, thereby reducing a board layout area of the current sampling circuit. In addition, the second current transformer has a simple installation process (for example, it can be directly soldered onto a PCB, and no lead wire is required), thereby effectively improving installation efficiency and reducing installation costs. In addition, because a sampling error of the current transformer can be generally controlled to be within 0.1% to 0.2%, the current sampling circuit formed by using the current transformer can implement high-precision current sampling.

It can be learned from FIG. 3 that a structure of the current sampling circuit is similar to the structure of the foregoing voltage sampling circuit, and a difference lies only in that no current-limiting resistor needs to be disposed in the current sampling circuit. Alternatively, it may be considered that the current sampling circuit and the voltage sampling circuit have a same circuit topology (that is, the current sampling circuit and the voltage sampling circuit use a same circuit), except that component parameters are different. For example, a resistance value of a current-limiting circuit in the current sampling circuit is 0. Because the current sampling circuit and the voltage sampling circuit in the subarray controller may use the same circuit topology, complexity of manufacturing processes of different types of sampling circuits in the subarray controller can be effectively reduced, thereby improving preparation efficiency and reducing preparation costs.

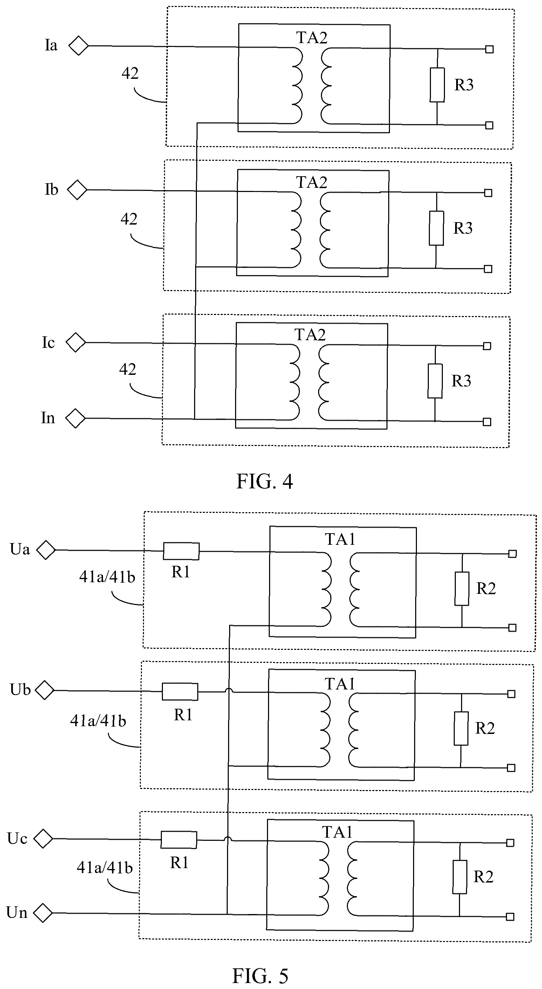

It may be understood that the lines connected to the voltage sampling circuit 41 and the current sampling circuit 42 each include a plurality of phase wires. For example, both ends of the on-grid/off-grid switch 30 include a plurality of phase wires, that is, each of the first alternating-current line 31 and the second alternating-current line 32 includes a plurality of phase wires. Each alternating-current line may employ a three-phase four-wire system, that is, each alternating-current line may include three phase wires A, B, and C, and one neutral wire N. Accordingly, the current sampling circuit 42 may be configured to collect current values of a plurality of phase wires in the line. As shown in FIG. 4, the subarray controller 40 may include a plurality of current sampling circuits 42 corresponding to a plurality of phase wires. A first end of each current sampling circuit 42 is connected to a corresponding phase wire. For example, one end of the primary winding of the second current transformer TA2 in each current sampling circuit 42 is connected to a corresponding phase wire, and the other end is connected to a neutral wire N. Each current sampling circuit 42 is configured to collect a current value of a corresponding phase wire, to implement precise sampling of alternating current values of the plurality of phase wires.

For example, as shown in FIG. 4, the subarray controller 40 may include three current sampling circuits 42 corresponding to three phase wires A, B, and C. The three current sampling circuits 42 can collect an alternating-current value of the phase wire A, an alternating-current value of the phase wire B, and an alternating-current value of the phase wire C respectively. In a current sampling scenario, as shown in FIG. 4, the three phase wires and one neutral wire N that are connected to the three current sampling circuits 42 may be represented as Ia, Ib, Ic, and In in turn.

It may be further understood that the subarray controller 40 may include two groups of current sampling circuits. One group of current sampling circuits is connected to one current sampling point of the line, for example, connected to one end of the on-grid/off-grid switch 30. The other group of current sampling circuits is connected to another current sampling point of the line, for example, connected to the other end of the on-grid/off-grid switch 30. In this way, precise sampling of current values at different positions on the same line can be implemented. Each group of current sampling circuits 42 may include a plurality of current sampling circuits 42 that are connected to a plurality of corresponding phase wires, to implement precise sampling of currents of the plurality of phase wires.

Optionally, in a scenario in which the line includes a plurality of phase wires, one voltage sampling circuit 41a among the two voltage sampling circuits in the subarray controller 40 may be configured to collect voltage values of the plurality of phase wires, and the other voltage sampling circuit 41b may be configured to collect voltage values of some phase wires (for example, one phase wire) in the line.

For example, as shown in FIG. 5, the subarray controller 40 may include a plurality of voltage sampling circuits 41a corresponding to a plurality of phase wires, and at least one voltage sampling circuit 41b corresponding to at least one phase wire. A first end of each voltage sampling circuit is connected to a corresponding phase wire. For example, one end of the primary winding of the first current transformer TA1 in each voltage sampling circuit is connected to a corresponding phase wire through the current-limiting resistor R1, and the other end is connected to a neutral wire N. Each voltage sampling circuit is configured to collect an alternating-current voltage value of a corresponding phase wire, to implement precise sampling of the alternating-current voltage value of the phase wire. A quantity of the at least one voltage sampling circuit 41b is less than a quantity of the plurality of phase wires, that is, the subarray controller 40 may collect alternating-current voltage values of only some phase wires at another position (for example, the other end of the on-grid/off-grid switch 30) on the line. For example, the subarray controller 40 may include only one voltage sampling circuit 41b, and the voltage sampling circuit 41b may collect an alternating-current voltage value of only one phase wire at another position (for example, the other end of the on-grid/off-grid switch 30) on the line.

Refer to FIG. 5 again. The subarray controller 40 may include three voltage sampling circuits 41a corresponding to three phase wires A, B, and C. The three voltage sampling circuits 41a can collect an alternating-current voltage value of the phase wire A, an alternating-current voltage value of the phase wire B, and an alternating-current voltage value of the phase wire C respectively. In a voltage sampling scenario, as shown in FIG. 5, the three phase wires and one neutral wire N that are connected to the three voltage sampling circuits 41a may be represented as Ua, Ub, Uc, and Un in turn.

It can be learned based on the foregoing analysis that, for different positions (for example, the two ends of the on-grid/off-grid switch 30) on the same line, the subarray controller 40 may sample an alternating-current voltage value of each phase wire at one position. For another position, alternating-current voltage values of only some phase wires (for example, one phase wire) may be sampled, and alternating-current voltage values of the other phase wires may be obtained through reckoning based on the sampled alternating-current voltage values. For example, it is assumed that the subarray controller 40 separately samples alternating-current voltage values of three phase wires A, B, and C at one end of the on-grid/off-grid switch 30, and an alternating-current voltage value of a phase wire A at the other end of the on-grid/off-grid switch 30. Therefore, the subarray controller 40 may compute a voltage ratio of the two ends based on an alternating-current voltage value of the phase wire A at one end and the alternating-current voltage value of the phase wire A at the other end; and then obtain, through reckoning based on the voltage ratio and alternating-current voltage values of the phase wire B and the phase wire C at one end, alternating-current voltage values of a phase wire B and a phase wire C at the other end.

In this embodiment of this application, a quantity of voltage sampling circuits that need to be disposed in the subarray controller is less than a total quantity of phase wires at different positions included in the same line. For example, alternating-current voltage values of six phase wires may be sampled by using four voltage sampling circuits. In this way, the size of the subarray controller can be effectively reduced, and costs and structural complexity of the subarray controller can be reduced.

Optionally, the subarray controller 40 may alternatively include at least one voltage sampling circuit 41a corresponding to at least one phase wire at one position (for example, one end of the on-grid/off-grid switch 30) on the line, and at least one voltage sampling circuit 41b corresponding to at least one phase wire at another position (for example, the other end of the on-grid/off-grid switch 30) on the line. In other words, a quantity of voltage sampling circuits 41a and a quantity of voltage sampling circuits 41b included in the subarray controller 40 are both less than a quantity of phase wires included in the line. In addition, a total quantity of the at least one voltage sampling circuit 41b and the at least one voltage sampling circuit 41b is greater than the quantity of phase wires included in the line. For example, the subarray controller 40 may include two voltage sampling circuits 41a and two voltage sampling circuits 41b. The two voltage sampling circuits 41a may collect alternating-current voltage values of a phase wire A and a phase wire B at one point (for example, one end of the on-grid/off-grid switch 30) on the line respectively, and the two voltage sampling circuits 41b may collect alternating-current voltage values of a phase wire A and a phase wire C at another point (for example, the other end of the on-grid/off-grid switch 30) on the line respectively.

It may be further understood that the subarray controller 40 may alternatively include a plurality of voltage sampling circuits 41a corresponding to a plurality of phase wires in the line, and a plurality of voltage sampling circuits 41b corresponding to a plurality of phase wires in the line. In this way, precise sampling of an alternating-current voltage value of each phase wire at each position (for example, each end of the on-grid/off-grid switch 30) on the line can be implemented.

The quantity of voltage sampling circuits 41a and the quantity of voltage sampling circuits 41b included in the subarray controller 40 are not limited in embodiments of this application. It is only necessary to ensure that the plurality of voltage sampling circuits in the subarray controller 40 can sample voltage values of the phase wire A, the phase wire B, and the phase wire C, and sampling at two positions can be implemented for at least one phase wire. The two positions mean different positions on the same line, for example, may be the two ends of the on-grid/off-grid switch 30, namely, two sides of the access point (or the grid-connected point).

Optionally, an order of magnitude of a resistance value of the current-limiting resistor R1 in the voltage sampling circuit 41 may be a kilo-ohm (kΩ) level. For example, a resistance value range of the current-limiting resistor R1 may be 50 KΩ to 200 KΩ. A transformation ratio of the first current transformer TA1 may be 1. For example, the transformation ratio of the first current transformer TA1 may be specifically 2 mA/2 mA, or may be 2.5 mA/2.5 mA. In this way, alternating-current voltage sampling in a wide range of 57.7 VAC to 277 VAC can be adapted based on the resistance value of the current-limiting resistor R1 and the transformation ratio of the first current transformer TA1.

In embodiments of this application, because the resistance value of the current-limiting resistor R1 is large, a high voltage of an alternating-current line can be converted into a small current and then input to the primary winding of the first current transformer TA1. Accordingly, specifications of the first current transformer TA1 can be small. For example, a miniature current transformer with a transformation ratio of 2 mA/2 mA may be employed. In this way, a board layout area of the voltage sampling circuit can be effectively reduced.

Optionally, a transformation ratio of the second current transformer TA2 may be 1 A/2.5 mA or 5 A/2.5 mA. In this way, 1 A alternating current (1IAC) and 5IAC alternating-current detection can be adapted.

It may be understood that the current-limiting resistor R1 may be formed by connecting a plurality of resistors in series, and the sampling resistor (for example, R2 or R3) may also be formed by connecting a plurality of resistors in series. An order of magnitude of a resistance value of the sampling resistor (for example, R2 or R3) may be an Ω level, for example, may be 50 Ω to 200 Ω.

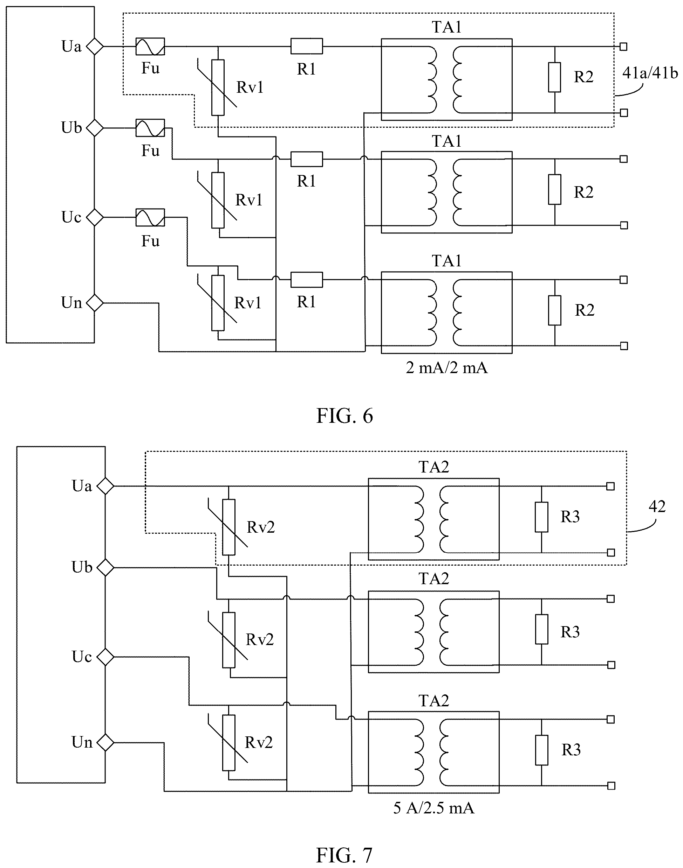

Optionally, as shown in FIG. 6, the voltage sampling circuit 41 may further include a fuse Fu. One end of the current-limiting resistor R1 in the voltage sampling circuit 41 is connected to the first end of the voltage sampling circuit 41 through the fuse Fu. In other words, the fuse Fu is further connected in series between the first end of the voltage sampling circuit 41 and the current-limiting resistor R1. For example, one end of the current-limiting resistor R1 in the voltage sampling circuit 41a is connected to one end of the on-grid/off-grid switch 30 through the fuse Fu, and one end of the current-limiting resistor R1 in the voltage sampling circuit 41b is connected to the other end of the on-grid/off-grid switch 30 through the fuse Fu.

It may be understood that, when a current in a circuit is excessively large, a fuse connected in series in the circuit is blown due to heating, to cut off the circuit and play a protection function. Therefore, the fuse is connected in series in the voltage sampling circuit to implement surge protection. It may be understood that, in the current sampling circuit 42, there is no need to connect a fuse in series, to prevent the current transformer from being disconnected and generating a high voltage.

Optionally, as shown in FIG. 6 again, the voltage sampling circuit 41 further includes a first varistor Rv1. The first varistor Rv1 is connected in parallel to the primary winding of the first current transformer TA1. Optionally, as shown in FIG. 7 again, the current sampling circuit 42 further includes a second varistor Rv2. The second varistor Rv2 is connected in parallel to the primary winding of the second current transformer TA2.

It may be understood that the varistor is a resistor device having a nonlinear volt-ampere characteristic. In a normal operating voltage range, the varistor has very high resistance and is equivalent to an insulator, and has minor impact on the circuit. When surge energy occurs in the circuit, the resistance of the varistor decreases sharply to quickly discharge the surge energy, so that impact of the surge on the circuit can be reduced, thereby improving stability and reliability of the circuit.

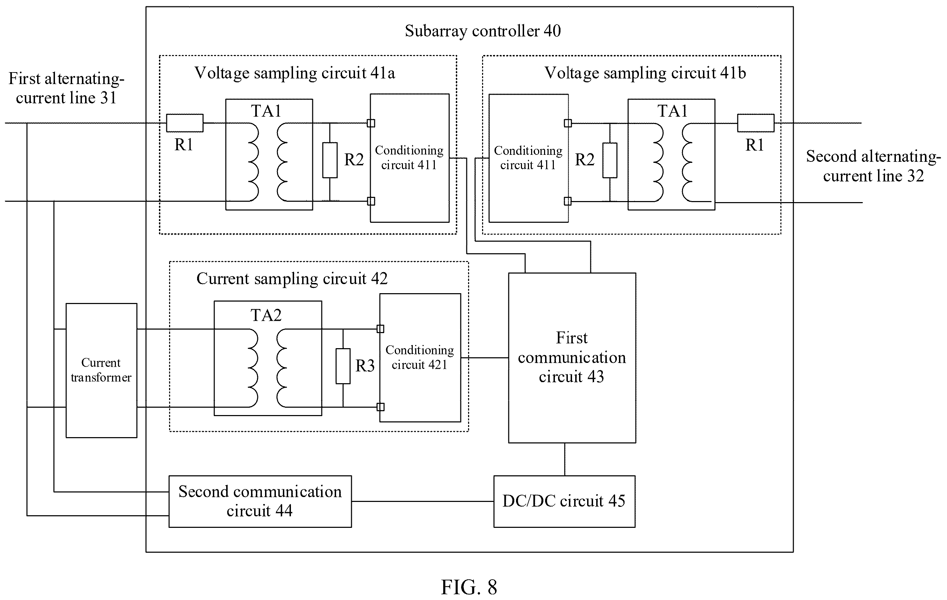

FIG. 8 is a diagram of a structure of another subarray controller according to an embodiment of this application. As shown in FIG. 8, the voltage sampling circuit 41 further includes a conditioning circuit 411, and the current sampling circuit 42 further includes a conditioning circuit 421. One end of the conditioning circuit 411 in the voltage sampling circuit 41 is connected to the first sampling resistor R2, and the other end is connected to a second end of the voltage sampling circuit 41 and is configured to process voltages at two ends of the first sampling resistor R2 and output the processed voltages. One end of the conditioning circuit 421 in the current sampling circuit 42 is connected to the second sampling resistor R3, and the other end is connected to a second end of the current sampling circuit 42 and is configured to process voltages at two ends of the second sampling resistor R3 and output the processed voltages. The processing performed by the conditioning circuits on the voltages at the two ends of the sampling resistors may include at least one of the following: amplification, filtering, level conversion, analog-to-digital conversion, or the like.

Optionally, as shown in FIG. 8, the subarray controller 40 may further include a first communication circuit 43. The first communication circuit 43 is separately connected to the second end of the voltage sampling circuit 41 and the second end of the current sampling circuit 42. For example, the first communication circuit 43 may be separately connected to the conditioning circuit in each sampling circuit, and is configured to receive processed data sent by each conditioning circuit.

In addition, the first communication circuit 43 further has a communication connection established to the station control device 50 in the photovoltaic system, and is configured to report sampled data to the station control device 50. The sampled data includes the voltage value collected by the voltage sampling circuit 41 and the current value collected by the current sampling circuit 42. The communication connection may be a fast Ethernet (fast Ethernet, FE) connection. For example, the FE connection may be implemented through an optical module. The sampled data may further include power that is obtained through computing based on the voltage value and the current value. For example, the sampled data may include power at the two ends of the on-grid/off-grid switch 30. Power at one end of the on-grid/off-grid switch 30 may be obtained through computing based on the voltage value collected by the voltage sampling circuit 41a and the current value collected by the current sampling circuit 42. Power at the other end of the on-grid/off-grid switch 30 may be obtained through computing based on the voltage value collected by the voltage sampling circuit 41b and the current value collected by the current sampling circuit 42.

It may be understood that, the station control device 50 in the photovoltaic system is also referred to as a station control layer device, and may be network management or a smart power plant controller (smart power plant controller, SPPC). After receiving subarray-level sampled data reported by the first communication circuit 43, the station control device 50 may perform operations such as three-phase synchronous turn-on determining and power computing.

In this embodiment of this application, the sampling circuit in the subarray controller 40 can directly collect values of voltages and values of currents on a line, for example, directly collect values of voltages and values of currents at the two ends of the on-grid/off-grid switch 30, and compute power, thereby implementing direct collection of power at a subarray level. Accordingly, the first communication circuit 43 in the subarray controller 40 may implement fast report of power of a subarray power generation unit (that is, an entire subarray is used as a power generation unit). For example, in a scenario in which the photovoltaic subarray employs a string-based solution, power collection and reporting capabilities of the photovoltaic subarray are comparable to those of a large inverter (also referred to as a large-capacity inverter). In addition, for reactive power cluster control of the power grid, usually a short power feedback delay at a subarray level needs to be ensured. For example, the delay needs to be within 100 milliseconds (ms). The solution provided in this embodiment of this application can meet a requirement of the power feedback delay.

Optionally, as shown in FIG. 8, the subarray controller 40 may further include a second communication circuit 44. The second communication circuit 44 is configured to communicate with a plurality of power converters 10. It may be understood that, the subarray controller 40 may obtain (for example, obtain through polling), by using the second communication circuit 44, running status data reported by the plurality of power converters 10, for example, voltages, currents, and power. The second communication circuit 44 may be an MBUS circuit.

It can be learned based on the foregoing analysis that, the subarray controller 40 provided in this embodiment of this application communicates with the power converters 10 through MBUS in a southbound direction and communicates with the station control device 50 through FE in a northbound direction, and can feed back voltage, current, and power data in real time, thereby implementing functions, such as port aggregation, protocol conversion, data collection, data storage, centralized monitoring, and centralized maintenance, for devices in the southbound direction and the northbound direction in the photovoltaic system.

It may be understood that the foregoing southbound and northbound communication manner of the subarray controller 40 is merely an example, and the subarray controller 40 may alternatively communicate with the devices in the southbound direction and the northbound direction in another communication manner. For example, the subarray controller 40 may alternatively communicate with the station control device 50 in the northbound direction by using a mobile communication technology, for example, the fourth generation mobile communication technology (the 4th generation mobile communication technology, 4G) or 5G. The subarray controller 40 may alternatively communicate with the power converters 10 in the southbound direction through PLC, a Modbus protocol, or RS485.

It may be further understood that the first communication circuit 43 and the second communication circuit 44 may be implemented by using a processor and a logic circuit in the subarray controller 40. The processor may be a central processing unit (central processing unit, CPU), which is also referred to as a main CPU.

Refer to FIG. 8 again. The subarray controller 40 may further include a DC/DC circuit 45. The DC/DC circuit 45 is configured to implement power supply voltage conversion, to ensure that a proper power supply voltage is provided for each component in the subarray controller 40. For example, it is assumed that a power supply voltage of the subarray controller 40 is 12 V, and a power supply voltage of the first communication circuit 43 is 3.3 V. The DC/DC circuit 45 may convert the power supply voltage of 12 V into 3.3 V, and then supply power to the first communication circuit 43.

In conclusion, embodiments of this application provide a subarray controller. The subarray controller can collect the voltage value by using the voltage sampling circuit, and collect the current value by using the current sampling circuit. The current sampling circuit is implemented by using the current transformer and the sampling resistor. The voltage sampling circuit is implemented by using the current-limiting resistor, the current transformer, and the sampling resistor. The current-limiting resistor can limit the magnitude of the current flowing into the current transformer. Therefore, specifications of the current transformer can be low. Compared with a power-dedicated voltage transformer, the low-specification current transformer has a small size to effectively reduce a board layout area, thereby reducing a size of the subarray controller, to ensure that the subarray controller can support horizontal and rail-mounted installation of a control cabinet. Good sampling performance can be maintained when an input current of the current transformer fluctuates within a large range near a rated current of the current transformer. Therefore, compared with a voltage transformer, a combination of the current-limiting resistor and the current transformer can implement voltage detection in a wide range. In addition, the foregoing current transformer has a simple installation process (for example, it can be directly soldered onto a PCB, and no lead wire is required), thereby effectively improving installation efficiency of the sampling circuits and reducing installation costs of the sampling circuits.

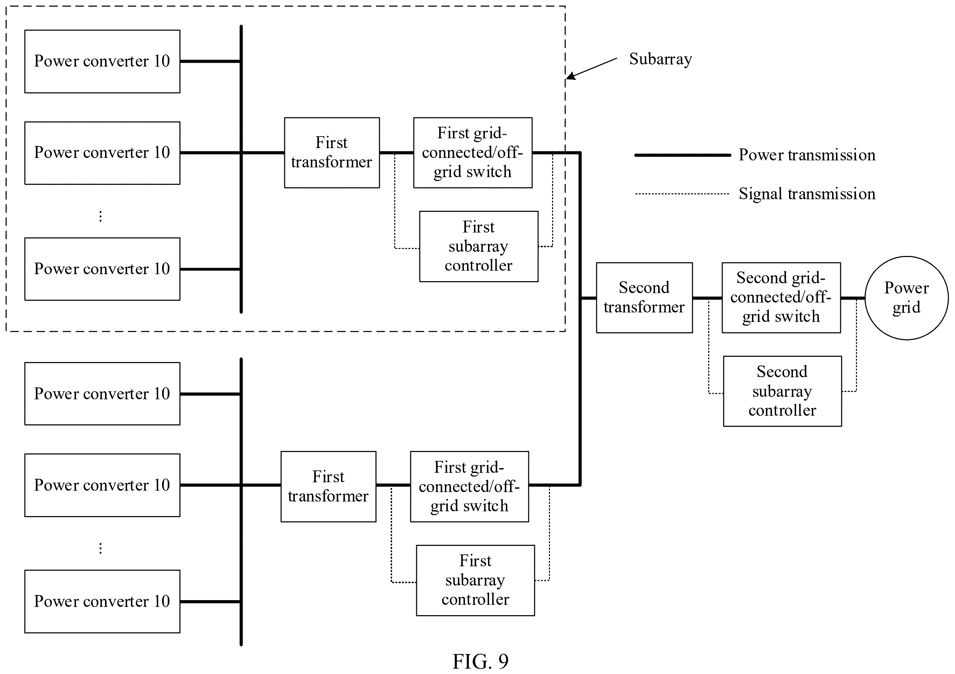

An embodiment of this application further provides a photovoltaic system. As shown in FIG. 9, the photovoltaic system includes a plurality of power converters 10, a first transformer, a first on-grid/off-grid switch, and a first subarray controller. The first subarray controller is the subarray controller 40 provided in the foregoing embodiments. Alternating-current ends of the plurality of power converters 10 are connected in parallel to one end of the first transformer, and the other end of the first transformer is connected to a power grid through the first on-grid/off-grid switch. The first subarray controller is separately connected to a first end and a second end of the first on-grid/off-grid switch, and is configured to collect values of voltages at the two ends of the first on-grid/off-grid switch and a value of a current flowing through the first on-grid/off-grid switch.

Optionally, as shown in FIG. 1 and FIG. 9, the photovoltaic system may include a plurality of photovoltaic subarrays (also referred to as subarrays). Each photovoltaic subarray includes a plurality of power converters 10, the first transformer, the first on-grid/off-grid switch, and the first subarray controller. In addition, as shown in FIG. 9, the photovoltaic system further includes a second transformer, a second on-grid/off-grid switch, and a second subarray controller. The second subarray controller is also the subarray controller 40 provided in the foregoing embodiments.

As shown in FIG. 1 and FIG. 9, the first on-grid/off-grid switches in the plurality of photovoltaic subarrays are connected in parallel to one end of the second transformer, and the other end of the second transformer is connected to the power grid through the second on-grid/off-grid switch. The second subarray controller is separately connected to two ends of the second on-grid/off-grid switch and is configured to collect values of voltages at the two ends of the second on-grid/off-grid switch and collect a value of a current flowing through the second on-grid/off-grid switch.

It may be understood that, for the first subarray controller, the on-grid/off-grid switch 30 described previously may be the first on-grid/off-grid switch; and for the second subarray controller, the on-grid/off-grid switch 30 described previously may be the second on-grid/off-grid switch.

It can be learned from FIG. 1 and FIG. 9 that, in the solution provided in this embodiment of this application, the first subarray controller can be disposed at an access point of each photovoltaic array, and the second subarray controller can be disposed at a grid-connected point of the photovoltaic system. In this way, power on two sides of the access point of each photovoltaic subarray can be directly collected, and power on two sides of the grid-connected point can be directly collected.

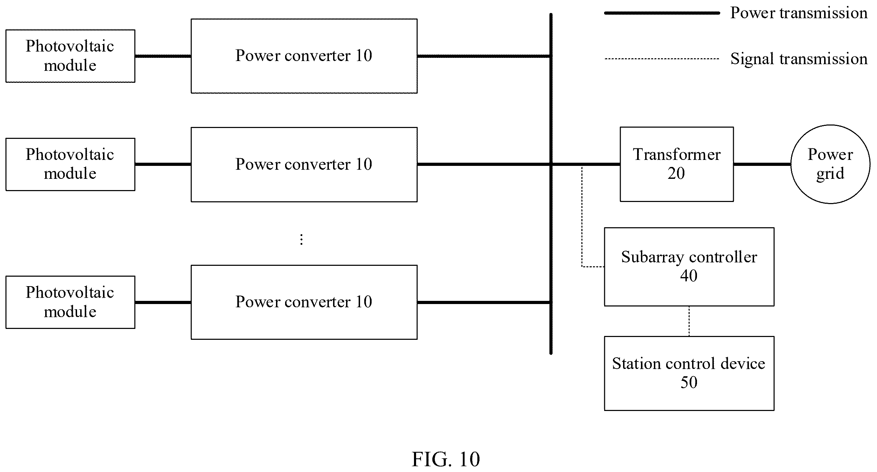

An embodiment of this application further provides another photovoltaic system. As shown in FIG. 10, the photovoltaic system includes a plurality of power converters 10, a transformer 20, and the subarray controller 40 provided in the foregoing embodiments. Alternating-current ends of the plurality of power converters 10 are connected in parallel to one end (namely, a low-voltage side) of the transformer 20, and the other end (namely, a high-voltage side) of the transformer 20 is configured to connect to a power grid. For example, the power grid may be connected through a on-grid/off-grid switch. The subarray controller 40 is connected to the low-voltage side of the transformer 20, and is configured to collect a value of a voltage and a value of a current on the low-voltage side of the transformer 20. In addition, the subarray controller 40 may further compute power on the low-voltage side of the transformer 20 based on the collected voltage value and the collected current value, and report the power to a station control device 50, thereby implementing direct collection and report of the power at a subarray level.

It may be further understood that, in the solutions provided in embodiments of this application, the subarray controller may be used as an independent module in a on-grid/off-grid scenario, or may be used together with a subarray-level control cabinet to implement on-grid/off-grid switching.

It may be further understood that the solutions provided in embodiments of this application can be applied to scenarios such as a microgrid scenario, a photovoltaic power station scenario, an industrial and commercial scenario, an energy storage scenario, or a charging network scenario. The subarray controller may be installed in an energy storage and power distribution compartment of a power station, an industrial and commercial energy storage and power distribution area, or a box-type transformer).

In embodiments of this application, the terms "first", "second", and "third" are merely used for description, and shall not be understood as an indication or implication of relative importance. The term "at least one" means one or more, and "a plurality of" means two or more.

The foregoing descriptions are merely optional implementations of this application, but the protection scope of this application is not limited thereto. Any equivalent modification or replacement readily figured out by a person skilled in the art within the technical scope disclosed in this application shall fall within the protection scope of this application. Therefore, the protection scope of this application shall be subject to the protection scope of the claims.

## Claims

1. A subarray controller, wherein the subarray controller comprises a voltage sampling circuit and a current sampling circuit;
the subarray controller is configured to communicate with a plurality of power converters, and is configured to transmit a voltage value collected by the voltage sampling circuit and a current value collected by the current sampling circuit to a station control device;
the voltage sampling circuit comprises a current-limiting resistor, a first current transformer, and a first sampling resistor; and
one end of the current-limiting resistor is connected to a first end of the voltage sampling circuit, the other end of the current-limiting resistor is connected to a primary winding of the first current transformer, and the first sampling resistor is connected in parallel to a secondary winding of the first current transformer.

2. The subarray controller according to claim 1, wherein the voltage sampling circuit is configured to collect values of voltages at two ends of a grid-connected/off-grid switch, and the current sampling circuit is configured to collect a value of a current flowing through the on-grid/off-grid switch.

3. The subarray controller according to claim 1 or 2, wherein the subarray controller comprises two voltage sampling circuits, the two voltage sampling circuits are configured to separately collect values of voltages at different positions on a same line, and the current sampling circuit is configured to collect a value of a current on the line.

4. The subarray controller according to claim 3, wherein one of the two voltage sampling circuits is configured to collect voltage values of a plurality of phase wires in the line, and the other of the two voltage sampling circuits is configured to collect a voltage value of one phase wire in the line.

5. The subarray controller according to claim 3 or 4, wherein the current sampling circuit is configured to collect current values of a plurality of phase wires in the line.

6. The subarray controller according to any one of claims 1 to 5, wherein the current sampling circuit comprises a second current transformer and a second sampling resistor; and
a primary winding of the second current transformer is connected to a first end of the current sampling circuit, and the second sampling resistor is connected in parallel to a secondary winding of the second current transformer.

7. The subarray controller according to any one of claims 1 to 6, wherein the voltage sampling circuit further comprises a fuse and a first varistor; and
one end of the current-limiting resistor is connected to the first end of the voltage sampling circuit through the fuse, and the first varistor is connected in parallel to the primary winding of the first current transformer.

8. The subarray controller according to claim 6, wherein the current sampling circuit further comprises a second varistor, and the second varistor is connected in parallel to the primary winding of the second current transformer.

9. The subarray controller according to any one of claims 1 to 8, wherein the subarray controller further comprises a communication circuit; and
the communication circuit is separately connected to a second end of the voltage sampling circuit and a second end of the current sampling circuit, and is configured to report the voltage value collected by the voltage sampling circuit and the current value collected by the current sampling circuit to the station control device.

10. A photovoltaic system, wherein the photovoltaic system comprises a plurality of power converters, a first transformer, a first on-grid/off-grid switch, and a first subarray controller, and the first subarray controller is the subarray controller according to any one of claims 1 to 9; and
alternating-current ends of the plurality of power converters are connected in parallel to one end of the first transformer, the other end of the first transformer is connected to a power grid through the first on-grid/off-grid switch, and the first subarray controller is separately connected to two ends of the first on-grid/off-grid switch and is configured to collect values of voltages at the two ends of the first on-grid/off-grid switch and collect a value of a current flowing through the first on-grid/off-grid switch.

11. The photovoltaic system according to claim 10, wherein the photovoltaic system comprises a plurality of photovoltaic subarrays, and each photovoltaic subarray comprises the plurality of power converters, the first transformer, the first on-grid/off-grid switch, and the first subarray controller;
the photovoltaic system further comprises a second transformer, a second on-grid/off-grid switch, and a second subarray controller, wherein the second subarray controller is the subarray controller according to any one of claims 1 to 9; and
the first on-grid/off-grid switches in the plurality of photovoltaic subarrays are connected in parallel to one end of the second transformer, the other end of the second transformer is connected to the power grid through the second on-grid/off-grid switch, and the second subarray controller is separately connected to two ends of the second on-grid/off-grid switch and is configured to collect values of voltages at the two ends of the second on-grid/off-grid switch and collect a value of a current flowing through the second on-grid/off-grid switch.
